Europäisches Patentamt

European Patent Office

Office européen des brevets

(19)

(11) Publication number: **0 061 436**
A1

(12) **EUROPEAN PATENT APPLICATION**

(21) Application number: **82830067.3**

(22) Date of filing: **22.03.82**

(51) Int. Cl.³: **A 01 C 17/00**
**A 01 C 15/00**

(30) Priority: **23.03.81 IT 6740281**

(43) Date of publication of application:
**29.09.82 Bulletin 82/39**

(84) Designated Contracting States:
**BE DE FR GB NL**

(71) Applicant: **Garrione, Pietro**
**Via Circonvallazione 3**
**I-13047 San Germano Vercellese Vercelli(IT)**

(72) Inventor: **Garrione, Pietro**
**Via Circonvallazione 3**
**I-13047 San Germano Vercellese Vercelli(IT)**

(74) Representative: **Jacobacci, Filippo et al,**
**c/o JACOBACCI-CASETTA & PERANI S.n.c. Via Alfieri, 17**
**I-10121 Torino(IT)**

(54) **Manure spreader.**

(57) A manure-spreading machine for solid manures comprises a hopper in the form of a tank (16) intended to contain the manure, a centrifugal distributor (20) disposed beneath a rear aperture in the bottom (18) of the tank and associated with an agitator device (30, 32), a longitudinal feed screw (34) adjacent the bottom (16c) of the tank and operable to feed the manure contained in the tank towards the said aperture, and a screw conveyor (36) parallel to and overlying the feed screw and having a transport direction opposite that of this latter. The screw conveyor permits the tank to discharge in a uniform manner and ensures a continuous and constant feed to the centrifugal distributor.

FIG. 1

EP 0 061 436 A1

Croydon Printing Company Ltd.

– 1 –

"Manure spreader"

The present invention relates,in general,to manure-spreading machines for solid manures.

In particular, the invention relates to a manure-spreading machine of the type comprising a hopper in the form of a tank intended to contain the manure, a centrifugal distributor disposed beneath a rear opening in the bottom of the tank with which there is associated a rotary agitator device extending within the rear part of the tank, and a feed screw extending longitudinally adjacent the bottom of the tank and operable to feed the manure contained in the tank progressively towards the said rear aperture of the tank itself.

Conventional manure-spreading machines of this type have the disadvantage that the action of the feed screw produces a non-uniform discharge of the manure product contained in the tank,since the front part of this latter tends to be emptied before the rear part towards which the manure is progressively transferred. This disadvantage is particularly critical

- 2 -

in the case of machines of the type towable by a tractor, that is to say, those in which the tank is mounted on a trailer provided with a pair of wheels, for obvious reasons of stability during operation.

Another disadvantage connected with normal manure-spreading machines of this type lies in the difficulty of feeding the manure towards the centrifugal distributor in a constant and uniform manner, avoiding excessive accumulations in the rear zone of the tank and consequent overflowing of the manure over the upper edge of this latter. To obviate, in part, this disadvantage it has been proposed to provide the feed screw with a progressive drive mechanism adjustable in dependence on the requirements of use. This solution, as well as not solving the above-mentioned problem in a satisfactory manner, is constructionally complex and involves additional costs both from the point of view of manufacture and from the point of view of maintenance of the machine.

The object of the present invention is that of obviating in a particularly simple, economic, and functional manner the above-mentioned disadvantages of conventional manure spreading machines.

With a view to achieving this object, the subject of the present invention is a manure-spreading machine for solid manures, of the type initially defined, the main characteristic of which lies in the fact that it further includes a screw conveyor parallel to and situated immediately above the feed screw and the transport direction of which is opposite to that of the feed screw.

The function of the screw conveyor is that of withdrawing excess material from the rear zone of the tank during operation of the feed screw, and transferring it towards the front part of the tank. In this way, it is possible to obtain, on the one hand, a uniform discharge of the tank with evident advantages relating to the stability and wheel grip on any type of ground of the carriage carrying the tank, and, on the other hand, a supply of manure to the centrifugal distributor which is always constant without requiring recourse to complex progressive kinematic feed screw drive mechanisms.

Another important advantage obtainable due to the arrangement according to the invention lies in the fact that the unit comprising the feed and conveyor screws acts, in operation, in the manner of a mixer in such a way as continuously to mix and blend the manure substances contained in the tank.

According to the invention the feed and conveyor screws are driven simultaneously by means of a common drive mechanism. This characteristic permits the machine to be significantly simplified, reducing the manufacturing costs and facilitating its maintenance.

Preferably, the angular speed of rotation of the conveyor screw is substantially equal to that of the feed screw.

The invention will now be described in detail with ref-

- 4 -

erence to the attached drawings, provided purely by way of non-limitative example, in which:

Figure 1 is a partially-sectioned,longitudinal,schematic view of a manure-spreading machine according to the invention;

Figure 2 is a partial cross-section taken on the line II-II of Figure 1; and

Figure 3 is a partially broken-away perspective view, on an enlarged scale, which illustrates a variant of a part of Figure 1.

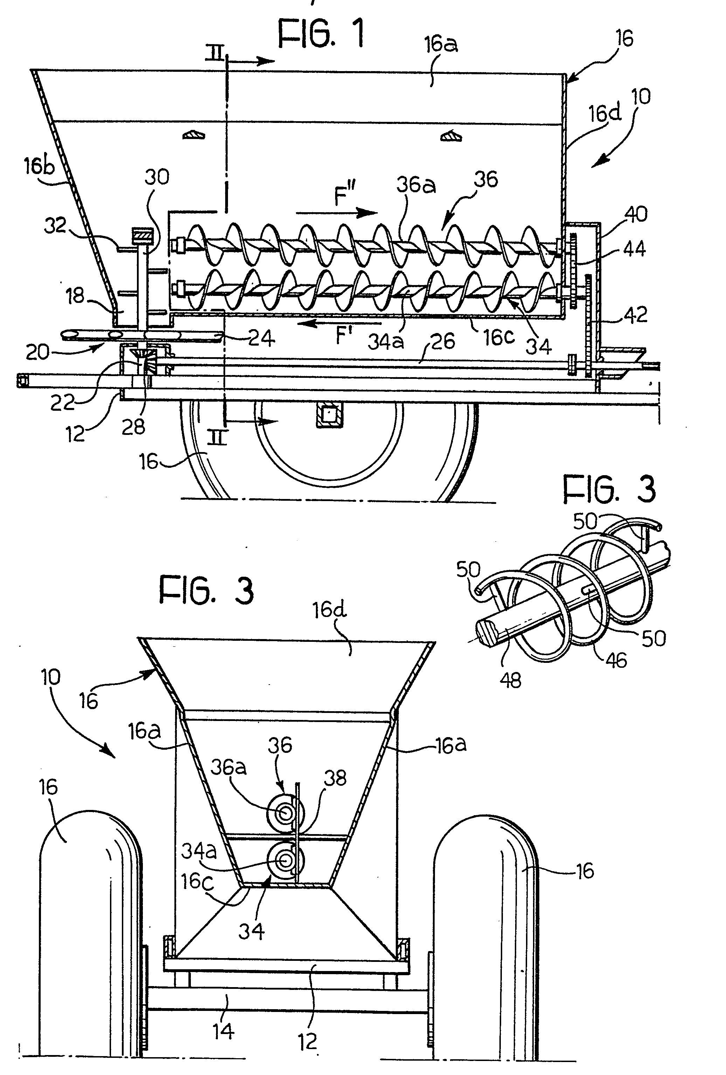

Referring initially to Figures 1 and 2, a manure-spreading machine for solid manures is generally indicated with the reference numeral 10. The machine 10 includes an agricultural trailer 12, having an axle 14 to the ends of which are mounted two wheels 16, which is provided at its front part with an attachment member of conventional type, not visible in the drawings, for connection to an agricultural tractor.

On the chassis of the trailer 12 there is mounted a hopper in the form of a tank 16 having a pair of inclined side walls 16a converging downwardly, a rear wall 16b which is also inclined, and a substantially horizontal bottom wall 16c. The bottom wall 16c has, at the rear part of the tank 16, a discharge aperture 18 beneath which is disposed a centrifugal distributor 20. This centrifugal distributor 20 comprises, in a manner known per se, a vertical shaft 22 supported rotatably by the chassis 12 and onto which is keyed a horizontal trailer bladed disc 24 which serves as a manure spreader. The rotary drive of the shaft 22, and therefore of the bladed disc 24, is obtained by means of a longitudinal transmission shaft 26 the front end of which is arranged for connection, in a known way, to the power take-off shaft of a tractor, via a pair of bevel gears 28.

The shaft 22 has an upper portion 30 which extends vertically, through the bottom aperture 18, into the interior of the rear part of the tank 16. The upper portion 30 of the shaft is provided with a plurality of radial arms 32 to form an agitator device.

A feed screw of conventional type, extending longitudinally within the interior of the tank 16 immediately adjacent the bottom 16c, is generally indicated with the reference numeral 34. This feed screw extends from the front end of the tank 16 to a point closely adjacent the rear zone in which the bottom aperture 18 is formed. The transport direction of the feed screw 34, which in the example illustrated in Figures 1 and 2 has a normal screw configuration, is indicated by the arrow F' in Figure 1, that is to say, from the front part of the tank 16 towards the rear part thereof.

A screw conveyor 36 is disposed parallel to the feed screw 34 and situated in a position immediately overlying this latter. The screw conveyor 36 has a configuration similar to that of the feed screw 34, and differs from this latter only in the different transport direction. In fact, this transport direction, indicated with the arrow F" in Figure 1, is from the

- 6 -

rear part towards the front part of the tank 16.

The arrangement of the feed screw 34 and the screw conveyor 36 is such that the distance between the edges of the respective helices is minimal, and pre- -ferably less than 10 cm in the case of application to a tank 16 of average dimenions.

The rear ends of the shafts of the feed screw 34 and screw conveyor 36, respectively indicated 34a and 36a, are supported for rotation by means of a common support structure 38 fixed to the side walls 16a of the tank 16. The front ends of the shafts 34a and 36a are supported for rotation by the front wall of the tank, indicated 16d, and project into a cover structure 40 fixed to the chassis 12 in front of the tank 16.

The rotary drive of the feed screw 34 and screw conveyor 36 is derived from the longitudinal shaft 26 which drives the distributor 20, by means of a first chain transmission 42 which connects the shaft 26 with the front end of the shaft 34a of the feed screw 34, and a second chain transmission 44 which connects the front end of the shaft 34a with the front end of the shaft 36a of the conveyor screw 36. In this way, the feed screw 34 and the conveyor screw 36 are driven simultaneously and in synchronism with the rotation of the centrifugal distributor 20.

In a preferred arrangement, the second chain transmission 44 is arranged to drive the conveyor 36 at the same speed of rotation as the feed screw 34. However, the transmission 46 could be formed in such a way as to

0061436

- 7 -

provide, in dependence on particular requirements of use, different speeds of rotation of the feed screw 34 and the screw conveyor 36.

In use, the manure product contained in the tank 16 is successively transferred; due to the action of the feed screw 34, towards the rear of the tank itself and the bottom aperture 18. The manure is then transferred, by virtue of the action of the agitator formed by the upper shaft portion 30 carrying the radial arms 32, over the upper part of the rotating disc 24 which acts to spread it out from the tank during advance of the trailer 12. Simultaneously, the screw conveyor 36 acts to return any possible excess manure from the rear part towards the front part of the tank 16, avoiding accumulations and eliminating the risk of overflowing of the manure over the upper edge of the tank.

In addition, the action of the screw conveyor 36 permits a progressive and uniform discharge of manure to be obtained, avoiding dangerous imbalance within the interior of the tank 16, so as to encourage correct stability and wheel grip of the trailer 12 when travelling over any type of ground. The combined action of the feed screw 34 and the conveyor screw 36 permits the manure product to be mixed in an effective manner in the lower part of the tank 16, thus serving as a mixer.

Although in the example illustrated in Figures 1 and 2 the feed screw 34 and the screw conveyor 36 have a normal screw configuration, that is to say, with complete helical active surfaces, it is clear that the invention is also applicable to the case in which the

- 8 -

feed screw 34 and the screw conveyor 36 have a different configuration, for example, one with active surfaces in the form of a strip or blades, or else of the type illustrated in the variant of Figure 3. In this variant, which can be obviously used both for the feed screw 34 and the screw conveyor 36, the active element is constituted by a helically wound rod 46 fixed to a shaft 48 by means of a plurality of radial spacer members 50. This arrangement is particularly advantageous in the case of relatively dry manure products, whilst the arrangement illustrated with reference to Figures 1 and 2 is more advantageous in the case of wetter manure products.

Claims:.

1.      A manure-spreading machine for solid manures,
of the type comprising a hopper in the form of a tank
(16) intended to contain the manure, a centrifugal distributor (20) disposed beneath a rear aperture (18) in
the bottom of the tank (16) and with which there is
associated a rotary agitator device (30, 32) extending
into the rear part of the tank (16), and a feed
screw (34) extending longitudinally adjacent the bottom
(16c) of the tank (16) and operable to feed the manure
contained in the tank (16) progressively towards the
said rear bottom aperture (18), characterised by the
fact that it further includes a screw conveyor (36)
parallel to and situated immediately above the said
feed screw (34) and the transport direction (F″) of
which is opposite to that (F') of the feed screw (34).

2.      A machine according to claim 1, characterised
by the fact that the feed and conveyor screws (34, 36)
are driven simultaneously by means of a common drive
mechanism (26, 42, 44).

3.      A machine according to claim 1 or claim 2,
characterised by the fact that the speed of rotation
of the screw conveyor (36) is substantially equal, in
operation, to that of the feed screw (34).

4.      A machine according to any preceding claim in
which the tank (10) is mounted on a trailer (12) which
can be towed by an agricultural tractor, and the centrifugal distributor (20) is driven by means of a shaft
(26) intended to be driven by the power take-off from the tractor, characterised by the fact that the said
feed screw (34) and the said screw conveyor (36) are
controlled directly from the said shaft (26) by means
of a chain transmission (42, 44).

# FIG. 1

II

16a    16

16d    10

16b

30    F''    36a    36

32    40

44

18    42

20    24    F'    34a    26    16c    34

22

12    28

II    16

16

# FIG. 3

## FIG. 3

16d

10

16

16a    36    16a

16    36a    38

16

34a

16c    16

34

14

12

50

50

50

46

48

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-C-1 220 457  (RAUSCH)<br>*Column 3, lines 25-60; figures 1,2,3,6* | 1,2,3 | A 01 C  17/00<br>A 01 C  15/00 |
| A | US-A-2 296 909  (DAKE)<br>*Page 1, right-hand column, lines 5-55; page 2, left-hand column and right-hand column, lines 1 to 56; figures 1,3,4,5,6* | 1,4 | |
| A | FR-A-2 427 770  (DELANOE)<br><br>*The whole document; figures 1,2* | 1,2,3, 4 | |

|  |
|---|
| TECHNICAL FIELDS SEARCHED (Int. Cl. ³) |
| A 01 C |

The present search report has been drawn up for all claims

| Place of search | Date of completion of the search | Examiner |
|---|---|---|
| THE HAGUE | 21-06-1982 | VERMANDER R.H. |